# EUROPEAN PATENT APPLICATION

(11) **EP 1 655 634 A1**
(43) Date of publication of application: **10.05.2006**
(21) Application number: 05024440.9
(22) Date of filing: 09.11.2005
(51) Int. Cl.: G02F 1/1335, G02F 1/13357

(54) **Liquid crystal display device and fabrication method thereof**

(30) Priority: 09.11.2004 KR 2004091067
(71) Applicant: LG Electronics Inc., Yongdungpo-gu Seoul (KR)
(72) Inventor: Lee, Ki-Dong, Bundang-Du Seongnam Gyeonggi-Do (KR)
(74) Representative: von Hellfeld, Axel

(57) **Abstract**

Disclosed are a liquid crystal display device and its fabrication method capable of improving brightness by increasing efficiency of light used for the image formation. A liquid crystal display (LCD) device, comprising: a backlight unit including a reflector and emitting light from a light source; a polarizer transmitting part of light emitted from the backlight unit and reflecting the rest of light to the backlight unit; and a liquid crystal display panel forming an image by using a light transmitted through the polarizer.

## Description

### BACKGROUND OF THE INVENTION

### 1. Field of the Invention

The present invention relates to an image display device and its fabrication method, and particularly to a liquid crystal display device and its fabrication method capable of improving brightness by improving efficiency of light used for image formation.

### 2. Description of the Related Art

A liquid crystal display (LCD) device is a flat panel display device which is used widely for a mobile terminal, a notebook computer, a monitor, a TV, and the like. In the LCD device, an image is formed by supplying an electric signal to each pixel of an LCD panel placed between two polarization plates and thusly changing arrangement of liquid crystals. Accordingly, the LCD device requires a special light source for its operation and may be divided into a reflective type and a transmissive type according to a method of using the light source.

The reflective LCD device uses an external light source such as sunlight or an indoor lamp, and has a structure that light is made incident upon a front surface of the LCD device and an observer observes light reflected from a reflector placed behind the LCD panel.

The transmissive LCD device has a special light source called a backlight unit (BLU) so that an observer observes transmitted light that is being uniformly provided from a rear surface of the LCD panel.

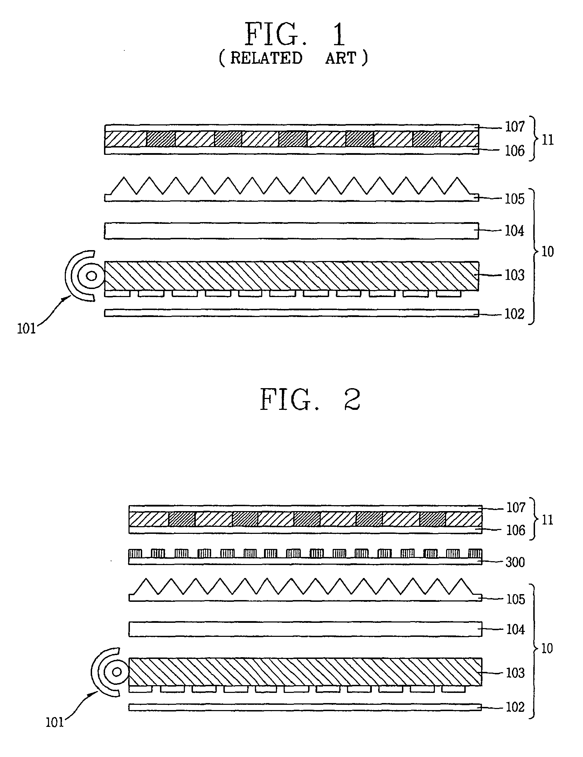

As shown in Figure 1, a related art transmissive LCD device includes a backlight unit 10 and an LCD panel 11.

The backlight unit 10 includes a light source 101, a reflector 102 for uniformly reflecting light emitted from the light source 101 to an entire surface of the LCD panel 11, a wave guiding plate 103, a diffusion plate 104 and a prism plate 105.

Accordingly, the light emitted from the light source is lost for the most part while passing through the backlight unit 10. Besides, because polarization plates 106 and 107 placed in front of and at the rear of the LCD panel 11 are an absorptive type, the plates 106 absorb 50% of light proceeding toward the LCD panel 11. For this reason, an observer observes substantially less than 10% of light emitted from the light source.

Namely, the LCD device is a very inefficient light modulator that transmits only 3~10% of incident light. As for a TFT LCD device, if calculation is made upon the assumption that the transmittance of two polarization plates is 45%, the transmittance of two sheets of glass is 94%, the transmittance of a TFT array and pixel is 65%, and the transmittance of a color filter is 27%, the light transmittance of the TFT LCD is approximately 7.4%. The transmittance of 12.1inch level TFT-LCD device is approximately 5~8%.

This means that the LCD device uses light with low efficiency, which disadvantageously causes an increase in power consumption of an electronic device using an LCD panel.

### BRIEF DESCRIPTION OF THE INVENTION

Therefore, an object of the present invention is to provide a liquid crystal display device and its fabrication method capable of improving brightness by using a reflective polarizer.

To achieve these and other advantages and in accordance with the purpose of the present invention, as embodied and broadly described herein, there is provided a liquid crystal display (LCD) device, comprising: a backlight unit including a reflector and emitting light from a light source; a polarizer transmitting part of light emitted from the backlight unit and reflecting the rest of light to the backlight unit; and a liquid crystal display panel forming an image by using a light transmitted through the polarizer.

To achieve these and other advantages and in accordance with the purpose of the present invention, as embodied and broadly described herein, there is provided a method for fabricating an LCD device comprising: determining a grid interval of a wire grid polarization to 1/2 or less of a wavelength of light used in the LCD device; fabricating a wire grid polarizer having the determined grid interval; and inserting the wire grid polarizer between a backlight unit and an LCD panel.

Preferably, the wire grid polarizer has a structure that reflects light having one of a P wave component or an S wave component to the backlight unit.

Preferably, a substrate of the wire grid polarizer is formed of a predetermined high molecular material.

Preferably, the wire grid of the wire grid polarizer is formed of a metallic wire.

Preferably, the wire grid of the wire grid polarizer is arranged at a regular interval in one direction.

Preferably, the wire grid polarizer has a structure that includes a passivation film for protecting the wire grid.

Preferably, an absorptive polarization film is formed at only one of both surfaces of the LCD panel.

Preferably, the absorptive polarization film is disposed at only the opposite side to the LCD panel surface facing the polarizer.

Preferably, a metallic grid is formed on a substrate surface of the LCD panel, and the polarizer and the LCD panel are integrally formed.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
Figure 1 is a view that illustrates a structure of a related art LCD device;
Figure 2 is a view that illustrates a structure of an LCD device in accordance with a first embodiment of the present invention;
Figure 3 is a view that illustrates a principle of a wire grid polarizer in accordance with the first embodiment of the present invention;
Figure 4 is a view that illustrates an operational principle of the LCD device in accordance with the first embodiment of the present invention;
Figure 5 is a view that illustrates a structure of the LCD device in accordance with a second embodiment of the present invention;
Figure 6 is a view that illustrates a structure of the LCD device in accordance with a third embodiment of the present invention;
Figure 7 is a view that illustrates one example of a structure of a wire grid polarizer used in the present invention; and
Figure 8 is a view that illustrates another example of a structure of the wire grid polarizer used in the present invention.

### DETAILED DESCRIPTION OF THE INVENTION

Reference will now be made in detail to the preferred embodiments of the present invention, examples of which are illustrated in the accompanying drawings. The same reference numerals are designated to the same elements, and the known function and structure that may obscure the gist of the present invention will be omitted.

Although a reflective polarizer used to improve brightness in the present invention is limited to a wire grid polarizer for simplifying the description, the present invention is not limited thereto.

Figure 2 is a view that illustrates a structure of the LCD device in accordance with the first embodiment of the present invention.

As shown, the LCD device in accordance with the first embodiment of the present invention includes a backlight unit 10, a wire grid polarizer 300 and an LCD panel 11.

As for the structure of the LCD device in accordance with the present invention, the backlight unit 10 is laminated at a lower part, the wire grid polarizer 300 is laminated on the backlight unit 10, and the LCD panel 11 is laminated on the wire grid polarizer 300.

The backlight unit 10 serves to supply light to the LCD panel 11, and includes a light source 101, a reflector 102, a wave guiding plate 103, a diffusion plate 104 and a prism plate 105. Here, the wave guiding plate 103 changes a linear light source into a surface light source, the reflector 102 changes a path that incident light proceeds by 180degrees, the diffusion plate 104 uniformly diffuses light, and the prism plate 105 reduces a diffusion angle of light.

In general, the light source 101 is divided into a CCFT (Cold Cathode Fluorescence Tube) and an HCFT (Hot Cathode Fluorescence Tube), and in the present invention, both of them can be used.

Light passing through the prism plate 105 is made incident upon the wire grid polarizer 300, part of the light passes through the wire grid polarizer 300 and is inputted to the LCD panel 11, and the other part of light is reflected to the backlight unit 10.

The operational principle of the wire grid polarizer 300 will now be described.

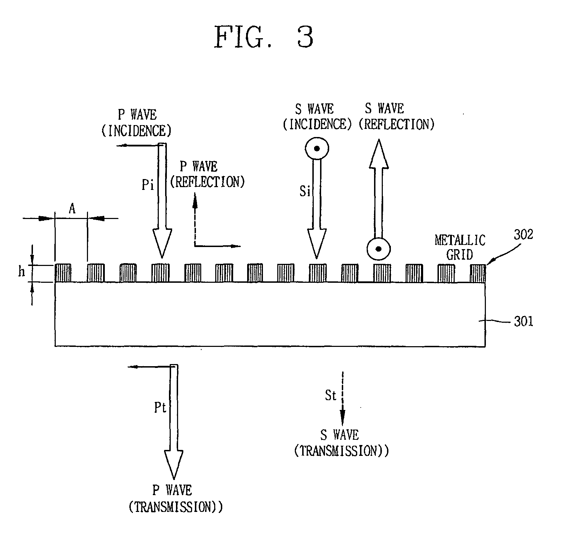

It has been known for a long time that metal wires arranged parallel selectively transmit and reflect an electromagnetic wave according to polarization. If an interval of metal wire arrangement is smaller than the half of the wavelength of an incident electromagnetic wave, a polarization component (S wave) parallel to a metal wire is reflected and a vertical polarization component (P wave) is transmitted. By using such a phenomenon, a planar polarizer having excellent polarization efficiency, a high transmittance and a wide viewing angle can be manufactured, and this kind of device is called a wire grid polarizer 300. Figure 3 is a schematic view that illustrates a principle of the wire grid polarizer 300 used for the present invention.

The light passing through the wire grid polarizer 300 is made incident upon the LCD panel 11. The LCD panel 11 includes a TFT array, a liquid crystal layer and a color filter array in case of a TFT. In the TFT array, one TFT exists in one pixel in general, functions as a switch for inputting data, which is required by a pixel, to a pixel from a data line, and is turned ON when a voltage higher than a threshold is applied to a gate line. The data line is positioned in a vertical direction of a panel in general and provides a data voltage, which is outputted from a driving IC, to a pixel. The number of pixels attached to one line corresponds to a vertical solution. The gate line is placed in a horizontal direction unlike the data line and receives a signal sequentially outputted from a gate IC (not shown)

A liquid crystal layer has a cell formed at a right angle to two sheets of transparent electrodes which is processed such that an axis of liquid crystal molecules in a longitudinal direction is aligned parallel to the electrode surface. If a nematic liquid crystal is injected thereto, an arrangement state that axes of a liquid crystal in a longitudinal direction are successively twisted at a right angle from one side electrode toward the other side electrode, is made.

Polarization films 106 and 107 exist on a lower layer of the TFT array and an upper layer of the color filter array. The polarization films 106 and 107 may be constructed in multiple layers, a supporter TAC (tri-acetyl-cellulose) is used at both sides of a high-molecular polarization material that polarizes incident light, and an adhesive layer exists in order to adhere the polarization films 106 and 107 to a glass surface. Preferably, AG (Anti-Glane) or an AR (anti-Reflection) coating layer and a passivation film, which is a low reflection layer, is formed at an upper surface.

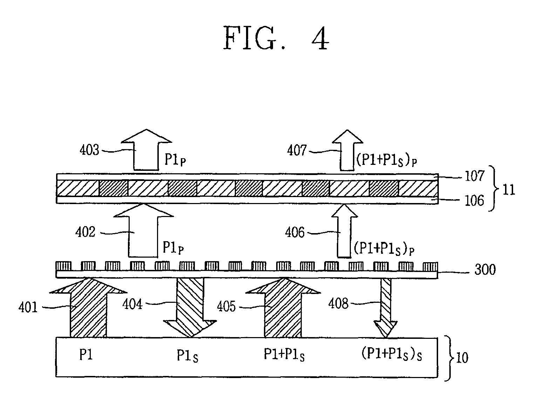

Figure 4 is a view that illustrates an operational principle of the LCD device in accordance with the first embodiment of the present invention, and the wire grid polarizer 300 is placed between the backlight unit 10 and the LCD panel 11.

As shown in Figure 4, when light is emitted from the light source 101, light 401 corresponding to the intensity of P1 is emitted via the reflection plate, the waveguiding plate, the diffusion plate and the prism plate of the backlight unit 10. When the light corresponding to P1 is made incident upon the wire grid polarizer 300, light 402 of P1p corresponding to the P wave of the light 401 of P1 passes through the wire grid polarizer 300 and implements image formation via the LCD panel 11. Light 404 of P1ₛ corresponding to the S wave of the light of P1 cannot pass through the wire grid polarizer 300 but is reflected to the backlight unit 10. The reflected light of P1ₛ is reflected by the reflector 102 exiting at the lowermost portion of the back light unit 10 and returns toward the wire grid polarizer 300. Here, the light 404 of P1ₛ is partially changed from the S wave to the P wave through the aforementioned processes because of optical characteristics.

The P1ₛ light 404 is mixed with P1 light emitted from the light source 101 and light of P1+P1ₛ is generated and is made incident upon the wire grid polarizer 300. (P1+P1ₛ)ₚ light 406 corresponding to the P wave of the light 405 of P1+P1ₛ passes through the wire grid polarizer 300 and implements image formation via the LCD panel 11, and light 408 of (P1+P1ₛ)ₛ corresponding to the S wave of the light of the P1+P1ₛ cannot pass through the wire grid polarizer 300 but is reflected and returns to the backlight unit 10. Namely, because the wire grid polarizer 300 reflects the light, the polarizer 300 does not absorb light that is not transmitted like a general polarizing plate but reflects it, so that the reflected light is mixed with light outputted from the light source and is projected onto the LCD panel.

As such processes are repeated, a large amount of light is made incident upon the LCD panel 11, thereby improving brightness of the LCD device. This can be possible because the wire grid polarizer 300 is not an absorptive polarizer but a reflective polarizer. Namely, in the prior art, light having an S-wave component is absorbed by a polarization film 106 of the LCD panel 11 and abandoned, but in the present invention, the light having the S-wave component can be recycled by using the wire grid polarizer 300, a reflective polarizer, thereby improving brightness.

Preferably, a metallic grid 302 constituting the wire grid polarizer 300 is formed at a right angle to a polarizing direction of the polarizing plates 106 and 107 of the LCD panel 11. Because the light passing through the wire grid polarizer 300 is a P-wave component, the forming direction of the wire grid polarizer 300 should coincide with the P-wave direction so that the P-wave component can be made incident upon the LCD panel 11.

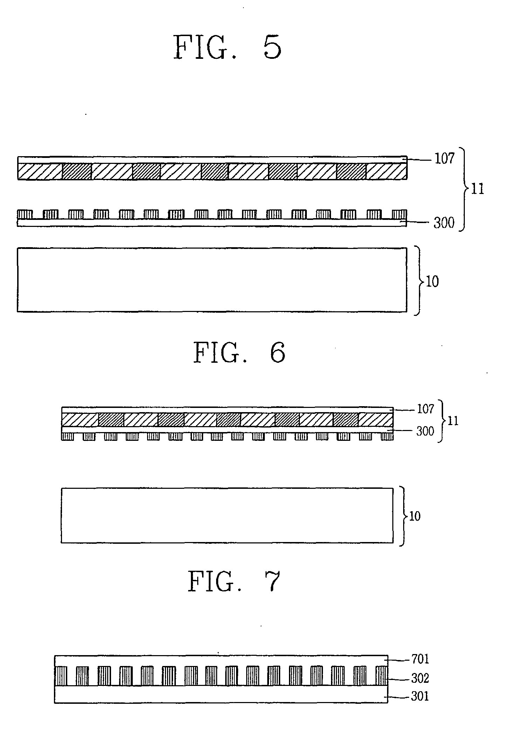

Figures 5 and 6 are views that illustrate a structure of the LCD device in accordance with different embodiments of the present invention, and shows a state that an absorptive polarization film formed at a lower portion of the LCD panel 11 is removed.

Figure 5 shows an embodiment where a lower one of the polarization films formed at both sides of the LCD panel 11 is removed. In this case, in order to obtain a high brightness, the polarization characteristic of the wire grid polarizer 300 should be the same or greater than that of the absorptive polarizing plate. Also, because such a structure can save one sheet of polarization film in fabrication, a fabrication cost can be reduced.

Referring to Figure 6, a metallic grid 302 is directly formed on a glass substrate surface of the LCD panel 11, and therefore, the wire grid polarizer 300 is integrated with the LCD panel 11.

It is clear that a method of forming the wire grid polarizer 300 or a disposition place of the wire grid polarizer 300 is not limited to the aforedescribed embodiment and may be varied by those skilled in the art.

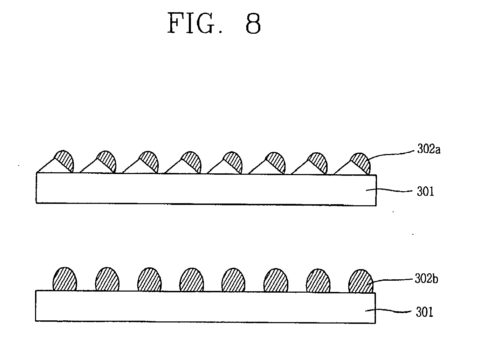

Figures 7 and 8 are views that illustrate a structure of the wire grid polarizer 300 in accordance with the first embodiment of the present invention, and various examples of the metallic grid 302 of the wire grid polarizer 300 are illustrated.

The wire grid polarizer 300 may be formed of various substrate materials, metal or various types of metallic wire. Preferably, various high molecules are used such as glass, Quartz, acryl, PET or the like that transmits visible rays. As metal 302, aluminum or silver having a high reflexibility with respect to visible rays may be representatively used but the present invention is not limited thereto. Also, to protect the metallic grid, as shown in Figure 7, a passivation film 710 can be formed.

The section of the metallic grid 302 may have various shapes such as a quadrangular shape, a triangular shape, a semicircular shape, and the like. As shown in Figure8, the section of the metallic grid 302 may have a metallic wire form which is formed on a substrate, patterned in the form of a triangle, a quadrangle, a sine wave and the like. Namely, regardless of the structure of the section, any structure can be used for the metal wire grid if the grid has a structure that metallic wires are arranged long in one direction at regular intervals. The important thing is that the interval between metallic wires of the grid should be the half of the wavelength of light being used or less, and accordingly, the interval is approximately 220nm or less, preferably.

According to the present invention, the brightness of the LCD device is increased by recycling of light, so that an observer can observe a brighter image and power consumption can be greatly reduced.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A liquid crystal display (LCD) device, comprising:
a backlight unit including a reflector and emitting light from a light source;
a polarizer transmitting part of light emitted from the backlight unit and
reflecting the rest of light to the backlight unit; and
a liquid crystal display panel forming an image by using a light transmitted
through the polarizer.

2. The LCD device of claim 1, wherein the polarizer has a structure that reflects light having one of a P wave component or an S wave component to the backlight unit.

3. The LCD device of claim 1, wherein the polarizer includes a wire grid polarizer.

4. The LCD device of claim 3, wherein the grid interval of the wire grid polarizer is 1/2 or less of a wavelength of light emitted from the light source.

5. The LCD device of claim 3, wherein the substrate of the wire grid polarizer is formed of a predetermined high molecular material.

6. The LCD device of claim 5, wherein the high molecular material includes quartz.

7. The LCD device of claim 5, wherein the high molecular material includes glass.

8. The LCD device of claim 3, wherein the wire grid of the wire grid polarizer is formed of a metallic wire.

9. The LCD device of claim 3, wherein the wire grid of the wire grid polarizer is arranged at a regular interval in one direction.

10. The LCD device of claim 3, wherein the wire grid polarizer has a structure that includes a passivation film for protecting the wire grid.

11. The LCD device of claim 1, wherein an absorptive polarization film is formed at only one of both surfaces of the LCD panel.

12. The LCD device of claim 11, wherein the absorptive polarization film is disposed at only the opposite side to the LCD panel surface facing the polarizer.

13. The LCD device of claim 1, wherein a metallic grid is formed on a substrate surface of the LCD panel, and the polarizer and the LCD panel are integrally formed.

14. A method for fabricating an LCD device comprising:
determining a grid interval of a wire grid polarization to 1/2 or less of a wavelength of light used in the LCD device;
fabricating a wire grid polarizer having the determined grid interval; and
inserting the wire grid polarizer between a backlight unit and an LCD panel.

15. The method of claim 14, wherein the wire grid polarizer has a structure that reflects light of one of a P wave component and an S wave component to the backlight unit.

16. The method of claim 14, wherein a substrate of the wire grid polarizer is made of a predetermined high-molecular material.

17. The method of claim 14, wherein the wire grid of the wire grid polarizer is made of a metallic wire.

18. The method of claim 14, wherein the wire grid of the wire grid polarizer is arranged in one direction at a regular interval.

19. The method of claim 14, wherein the wire grid polarizer has a structure including a passivation film for protecting the wire grid.

20. The method of claim 14, wherein the LCD panel has an absorptive polarization film at only one of both surfaces.

21. The method of claim 20, wherein the absorptive polarization film is disposed at only the opposite surface to an LCD panel surface facing the wire grid polarizer.

22. The method of claim 14, a metallic grid is formed on a substrate surface of the LCD panel, and the wire grid polarizer and thte LCD panel are integrally formed.
